# FASCICULE DE BREVET EUROPEEN

(11) **EP 0 703 882 B1**
(45) Date de publication et mention de la délivrance du brevet: **16.12.1998**
(21) Numéro de dépôt: 95916708.1
(22) Date de dépôt: 05.04.1995
(51) Int. Cl.: C04B 41/45, C04B 41/86, B05D 1/32, B05D 1/18, F16D 65/12, C04B 35/83

(54) **PROCEDE POUR L'APPLICATION D'UNE PROTECTION ANTI-OXYDATION SUR DES DISQUES DE FREIN EN MATERIAU COMPOSITE CONTENANT DU CARBONE**
VERFAHREM ZUM ANBRINGEN EINES OXIDATIONSSCHUTZ AUF BREMSSCHEIBEN AUS KOHLENSTOFF ENTHALTENDEM VERBUNDMATERIAL
METHOD FOR APPLYING AN ANTI-OXIDATIVE COATING ON BRAKE DISKS OF A CARBON-CONTAINING COMPOSITE MATERIAL

(30) Priorité: 05.04.1994 FR 9403972
(43) Date de publication de la demande: 03.04.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: THEBAULT, Jacques, F-33200 Bordeaux (FR); LAXAGUE, Michel, F-33200 Bordeaux (FR); REY, Jacques, F-33700 Merignac (FR); DELAVAL, Rodolphe, F-62500 St.-Martin-au-Laert (FR); PALAVIT, Gérard, F-59500 Douai (FR)
(74) Mandataire: Joly, Jean-Jacques
(86) Numéro de dépôt international: FR9500431
(87) Numéro de publication internationale: WO9526941

(56) Documents cités:
- EP-A- 0 365 235
- EP-A- 0 495 583
- WO-A-93/13033
- DE-A- 1 596 487
- FR-A- 2 334 013
- FR-A- 2 525 207
- US-A- 3 850 669
- US-A- 4 454 193

## Description

La présente invention concerne la protection contre l'oxydation de disques de frein en matériau composite contenant du carbone.

Les disques de frein en matériau composite contenant du carbone sont bien connus et utilisés en particulier pour des freins de véhicules automobiles de compétition et des freins d'aéronefs. Ils présentent l'avantage d'offrir de bonnes caractéristiques tribologiques jusqu'à des températures relativement élevées, et de présenter une excellente tenue mécanique, pour une masse spécifique bien inférieure à celle des disques massifs classiques, notamment les disques métalliques.

Parmi les matériaux composites contenant du carbone destinés à la fabrication de disques de frein, celui utilisé le plus couramment est le matériau composite carbone-carbone. Celui-ci comprend un renfort, ou préforme, constitué de fibres de carbone, par exemple sous forme de couches superposées de tissu carbone éventuellement liées entre elles par aiguilletage, renfort qui est densifié par une matrice en carbone. Toutefois, d'autres matériaux composites contenant du carbone ont été proposés pour des disques de frein, notamment des matériaux à renfort en fibres de carbone et matrice en céramique (par exemple carbure de silicium) ou matrice mixte en carbone et céramique, ainsi que des matériaux à renfort en fibres céramique et matrice céramique, avec interposition d'une couche d'adaptation ou interphase en carbone pyrolytique entre les fibres et la matrice.

Un disque de frein comporte essentiellement deux zones : une première zone constituée par sa ou ses faces frottantes et une deuxième zone constituée par tout ce qui ne constitue pas une face frottante. Dans la première zone, ce sont les caractéristiques tribologiques du matériau constitutif du disque qui sont prépondérantes. La deuxième zone correspond notamment à la partie du disque qui assure des fonctions mécaniques de fixation du disque et de reprise des efforts. Il est essentiel de conserver l'intégrité du matériau constitutif du disque dans la deuxième zone. Aussi, dans le cas de disques de freins en matériau composite contenant du carbone, une protection anti-oxydation efficace doit être prévue dans cette deuxième zone, les disques étant normalement portés, lors de leur utilisation, à une température comprise dans le domaine d'oxydation du carbone, c'est-à-dire une température supérieure à 350° C. A défaut d'une protection anti-oxydation, la disparition du carbone dans la zone des disques assurant une fonction mécanique va altérer les propriétés mécaniques, pouvant conduire à des ruptures de parties de fixation ou de reprise d'efforts. Il en est ainsi à l'évidence pour des disques en matériau composite carbone-carbone en raison de la perte de masse causée par l'oxydation du carbone. Il en est également ainsi lorsque le carbone est présent uniquement dans les fibres du renfort, en raison du rôle de celui-ci au regard des propriétés mécaniques du matériau, et même lorsque le carbone n'est présent que dans une interphase en carbone pyrolytique entre fibres et matrice, la fonction de l'interphase pour les propriétés mécaniques étant essentielle, comme décrit dans le document EP-A-0 172 082.

Quel que soit le mode d'élaboration du matériau composite -imprégnation d'une préforme fibreuse par une composition liquide contenant un précurseur de la matrice (par exemple une résine) suivie d'une transformation du précurseur par traitement thermique, ou densification d'une préforme fibreuse par la matrice déposée au coeur de la préforme par infiltration chimique en phase vapeur- le matériau obtenu présente une porosité résiduelle ouverte dans tout son volume.

La protection contre l'oxydation de matériaux composites contenant du carbone et présentant une telle porosité, de même que la protection contre l'oxydation de carbone ou graphite massifs poreux a donné lieu à un abondant état de la tcchnique.

Généralement, la protection anti-oxydation est sous forme d'une couche de matière réfractaire, telle qu'un carbure, un nitrure, un borure ou un oxyde. La couche peut présenter un caractère autocicatrisant ou être complétée par une couche ayant une telle propriété. Les matériaux autocicatrisants couramment utilisés sont des compositions verrières, l'autocicatrisation désignant ici la faculté du matériau, par passage à l'état visqueux dans le domaine de température d'utilisation, à combler des microfissures ou défauts similaires susceptibles d'apparaître dans la protection.

Deux types de procédés peuvent être utilisés, seuls ou en combinaison, pour constituer une barrière de protection vis-à-vis de l'oxygène du milieu ambiant :
- formation d'une protection externe par un revêtement de surface ; celui-ci peut être obtenu par application d'une composition à l'état liquide ou fluide qui, après séchage ou solidification et éventuellement traitement chimique donne la protection externe recherchée, par dépôt chimique en phase vapeur, par pulvérisation au plasma,... ; ou
- formation d'une protection interne au sein de la porosité ouverte du produit ; cette protection interne peut être réalisée par imprégnation du produit par une composition liquide qui, également après séchage ou solidification et éventuellement traitement thermique donne la protection interne recherchée.

Dans le cas de disques de frein en carbone-carbone, il est connu de former une couche de protection externe par application d'un revêtement de surface sur les parties non frottantes des disques. A titre d'exemple, on pourra se référer au document FR-A-2 334 013. Il est toutefois nécessaire de ne pas appliquer de couche de protection sur les faces frottantes. En effet, ce serait alors le matériau de la couche de protection anti-oxydation qui contrôlerait la tribologie et non pas le carbone-carbone pourtant choisi à cet effet. De plus, même si le matériau de la couche de protection pouvait convenir du point de vue tribologie, l'usure de celui-ci par frottement conduirait à sa disparition progressive et à une transition brusque vers le matériau carbone-carbone. Un tel changement imprévisible en cours d'utilisation des disques de frein serait inacceptable.

L'utilisation d'une protection externe, même limitée aux parties non frottantes, présente toutefois des inconvénients. En effet, le moindre défaut de continuité dans le revêtement de surface, par exemple "trous d'épingle" apparaissant lors de la formation de celui-ci, ou écaillage local lors de l'utilisation ou d'un choc accidentel offre une voie d'accès à l'oxygène du milieu ambiant. L'oxydation peut alors se propager sous le revêtement de protection externe, pouvant priver celui-ci de substratum et le phénomène d'écaillage du revêtement va s'amplifier.

De plus, à la limite entre une face frottante dépourvue de protection externe et d'une partie du disque munie d'une protection externe, le même phénomène d'oxydation sous-jacente peut se produire et, avec l'usure de la face frottante, conduire à l'élimination de la protection adjacente. Une élimination de ces inconvénients en conférant un caractère auto-cicatrisant à la protection externe ou à une couche complémentaire associée à celle-ci n'est guère envisageable. En effet, il en résulterait un passage à l'état visqueux de la surface des disques dans des zones utilisées pour le montage mécanique des disques ou la reprise d'efforts mécaniques. Aussi, si une protection anti-oxydation par application d'un revêtement de surface sur les parties non frottantes peut s'avérer efficace au début de la durée de service du disque de frein, sa dégradation peut être rapide et conduire à des mises au rebut prématurées.

Une protection interne ancrée au sein de la porosité ouverte du matériau ne présente pas ces inconvénients, d'autant que des propriétés autocicatrisantes peuvent alors être éventuellement conférées à cette protection ou à une couche associée à celle-ci.

Des procédés de formation d'une protection interne anti-oxydation par imprégnation de la porosité de matériaux composites contenant du carbone ou de carbone ou graphite massifs sont connus et efficaces. Appliqués à des disques de frein, ils présentent l'inconvénient d'introduire la protection interne uniformément, donc également dans la porosité adjacente aux faces frottantes. Or, il a été constaté que la présence de la protection interne dans la porosité adjacente aux faces frottantes dégrade les propriétés tribologiques, et ce de façon durable au fur et à mesure de l'usure des faces frottantes.

L'invention a pour but de fournir un procédé permettant l'application d'une protection anti-oxydation à un disque de frein en matériau composite contenant du carbone sans présenter les inconvénients précités.

Plus particulièrement, l'invention a pour but de fournir un procédé grâce auquel une protection anti-oxydation efficace et durable peut être appliquée aux parties non frottantes d'un disque de frein en matériau composite contenant du carbone, sans altérer les caractéristiques tribologiques du matériau dans les parties frottantes.

Ce but est atteint grâce à un procédé qui comprend les étapes qui consistent à :
- masquer chaque face frottante du disque de frein pour l'isoler de l'extérieur de façon étanche aux liquides,
- immerger ensuite le disque de frein dans un bain d'une composition d'imprégnation contenant au moins un produit susceptible de permettre la formation d'une couche de protection anti-oxydation, et
- réaliser une imprégnation en établissant une différence entre la pression à l'extérieur des surfaces exposées du disque de frein immergé et la pression à l'intérieur de la porosité interne ouverte du disque de frein, sans vider totalement celle-ci de l'air qu'elle contient, de façon à forcer la composition d'imprégnation à pénétrer au sein de la porosité interne ouverte du disque sur une certaine profondeur à partir des surfaces exposées, afin d'y permettre la formation d'une protection interne anti-oxydation.

La différence de pression est avantageusement ajustée en fonction de la profondeur souhaitée de pénétration de la composition d'imprégnation dans la porosité interne ouverte. La profondeur de pénétration est limitée pour éviter une présence de la protection interne dans la partie adjacente à chaque face frottante, si ce n'est à proximité de la frontière entre face frottante et partie de surface non frottante. Selon les dimensions du disque, la profondeur de pénétration peut être comprise entre environ 2 mm et environ 10 mm.

La différence de pression permettant de réaliser l'imprégnation peut être établie :
- en exerçant sur les surfaces exposées du disque de frein immergé une pression supérieure à la pression ambiante régnant initialement au sein de la porosité interne ouverte du disque, ou
- en établissant au sein de la porosité interne ouverte du disque une pression inférieure à celle qui y régnait initialement, ou
- par une combinaison de ces deux moyens.

Dans le premier cas, la surpression peut être obtenue en immergeant le disque de frein dans le bain de composition d'imprégnation à l'intérieur d'une enceinte où une surpression est établie. Il est également possible d'immerger le disque de frein de façon qu'il soit surmonté d'une hauteur de liquide fonction de la surpression souhaitée. Il est important, lorsque le disque imprégné est retiré du bain d'imprégnation, que la composition d'imprégnation ayant pénétré dans la porosité interne du disque n'en soit pas expulsée lors du rééquilibrage de la pression entre l'intérieur et l'extérieur du disque. Les faibles dimensions de la porosité font que les forces capillaires et les phénomènes de tension de surface sont suffisants pour s'opposer à cette expulsion, le rééquilibrage de pression se faisant à travers une macroporosité pratiquement toujours présente. Il est toutefois préférable d'utiliser une composition d'imprégnation ayant une viscosité assez faible, tout en n'étant pas trop élevée pour permettre l'imprégnation sans demander une grande différence de pression. Cette viscosité est par exemple comprise entre environ 0,1 dPa.s et environ 10 dPa.s, de préférence entre 0,1 dPa.s et 1 dPa.s.

Dans le deuxième cas, la dépression peut être établie en mettant en communication le bain dans lequel le disque est immergé avec une source de vide, de façon à abaisser la pression au sein de la porosité ouverte du disque sans vider celle-ci totalement de l'air qu'elle contenait initialement, le bain étant ensuite ramené à la pression ambiante ou à une pression supérieure à celle-ci. La dépression peut aussi être établie en mettant en communication au moins une face frottante masquée du disque immergé avec une source de vide. Le maintien de la dépression après l'imprégnation permet d'éviter une expulsion de la composition d'imprégnation, même si elle a une faible viscosité, jusqu'à séchage ou solidification de cette composition.

Dans la mesure où il est souhaité une profondeur de pénétration constante et uniforme dans toute la porosité interne accessible depuis les surfaces exposées, il pourra être prévu un entraînement en rotation du disque autour d'un axe horizontal au sein du bain de composition d'imprégnation.

L'étanchéité de chaque face frottante annulairc du disque peut être réalisée de différentes façons.

Il est possible de munir chaque face frottante d'une plaque appliquée de façon étanche aux liquides au moins sur les bords de la face frottante. La plaque peut être rigide et munie de joints d'étanchéité appliqué le long des bords de la face frottante. La plaque peut être rigide ou non rigide et comporter des bourrelets formant joints d'étanchéité appliqués sur les bords de la face frottante. Il est encore possible d'utiliser une plaque sous forme d'une feuille en matériau élastiquement déformable pressée contre la face frottante. Dans tous les cas, le maintien de la plaque d'étanchéité appliquée contre la face frottante peut être réalisé au moyen d'un outillage.

En variante, l'étanchéité de chaque face frottante est réalisée par application d'une couche de revêtement étanche. Celle-ci peut être formée par tout moyen du type de ceux utilisés pour la réalisation d'une protection de surface, notamment par pistolettage ou application à la brosse d'une composition liquide telle qu'une solution ou une suspension qui est ensuite séchée et éventuellement traitée thermiquement, ou encore par pulvérisation au plasma. L'élimination de ce revêtement de surface est réalisé, avant montage du disque, par exemple par usinage (rectification). Il est également envisageable de déposer sur chaque face frottante à masquer une composition de caoutchouc ou d'élastomère à l'état pâteux, qui est ensuite vulcanisée, le revêtement ainsi formé pouvant être pelé après réalisation de la protection interne.

De préférence, plusieurs disques de frein sont immergés et imprégnés simultanément, chaque face frottante étant masquée, les disques étant disposés coaxialement et assemblés dans un outillage. Le masquage de deux faces frottantes situées en regard peut être réalisé au moyen d'une même plaque appliquée de façon étanche aux liquides au moins sur les bords de chacune des deux faces frottantes.

Un disque de frein destiné à être monté à une extrémité d'un empilement de disques stators alternant avec des disques rotors, dans un frein multi-disques, comporte une face extérieure non frottante opposée à une face intérieure frottante. L'application d'une protection interne sur les parties non frottantes peut nécessiter le masquage au moins partiel de la face extérieure non frottante par l'outillage utilisé pour le masquage de la face frottante intérieure et/ou pour le maintien de plusieurs disques assemblés. Dans ce cas, après formation de la protection interne anti-oxydation, la face extérieure non frottante peut être munie, de façon connue, d'un revêtement de surface de protection contre l'oxydation.

L'imprégnation des disques de frein pour former la protection interne anti-oxydation peut être réalisée avec une composition d'imprégnation comprenant :
- une solution de précurseurs du matériau constitutif de la protection interne, ou
- une suspension de précurseurs du matériau constitutif de la protection interne, ou
- un mélange des constituants de la protection interne à l'état fondu.

Lorsque la composition d'imprégnation est une solution ou une suspension de précurseurs de la protection interne, celle-ci est obtenue par traitement thermique effectué après séchage des disques imprégnés.

Avantageusement, la protection interne est sous forme d'une composition verrière ayant de préférence des propriétés autocicatrisantes dans le domaine d'utilisation des disques de frein, c'est-à-dire une composition ayant une température de transition vitreuse Tg relativement faible. Par composition verrière, on entend ici un verre proprement dit, ou une composition qui fond comme un verre, mais dans laquelle une phase cristalline peut apparaître au refroidissement ou dans le temps, générant une dévitrification partielle (verre contenant des grains cristallins). Pour assurer une protection efficace dès le début du domaine d'oxydation du carbone, c'est-à-dire dès environ 350°C, on pourra choisir une composition verrière pour laquelle Tg est compris entre environ 250°C et environ 350°C. La composition conserve ses propriétés autocicatrisantes dans une plage de température couvrant environ 500°C, ce qui offre une protection anti-oxydation efficace entre environ 250°C à 350°C et environ 750°C à 850°C. Lorsque la composition verrière est portée à une température plus élevée, la viscosité devient faible, avec un risque de fluidification trop importante de la protection interne. Par conséquent, si une protection efficace est recherchée jusqu'à 900°C à 1000°C, la composition verrière de la protection interne est choisie pour présenter une valeur Tg comprise entre environ 400°C et 500°C. Un défaut d'efficacité de la protection doit alors être toléré au tout début de la plage d'oxydation du carbone ce qui ne présente pas un grand inconvénient, la cinétique d'oxydation étant encore faible.

Les compositions verrières ayant une température Tg relativement faible susceptibles de convenir sont, par exemple, de façon connue en soi, des compositions à base phosphate, c'est-à-dire des compositions dans lesquelles l'oxyde formateur principal du réseau de verre est P₂O₅. On pourra se référer en particulier aux documents US-A-3 351 477, US-A-4 292 345 et FR-A-2 685 694. Les phosphates, vitreux ou non, présentent en outre l'avantage de présenter un effet anti-catalyseur vis-à-vis de l'oxydation catalytique du carbone.

La porosité interne résiduelle des matériaux composites pour disques de frein est de faibles dimensions, la porosité initiale de la préforme fibreuse ayant été majoritairement comblée par la matrice. Une imprégnation en profondeur par une suspension peut alors être difficile à réaliser en pratique, les particules solides ayant tendance à s'agglomérer en surface. L'utilisation d'une composition d'imprégnation comprenant les constituants de la protection interne à l'état fondu soulève également des difficultés. La viscosité de la composition impose en effet l'utilisation de pressions relativement fortes, pour pénétrer une porosité de faibles dimensions, et ce à température élevée.

Il est donc préférable de réaliser l'imprégnation des disques par une solution totale de précurseurs de la protection interne, avantageusement une solution aqueuse.

Des solutions aqueuses contenant des précurseurs d'une protection anti-oxydation et destinées à l'imprégnation de matériaux poreux contenant du carbone afin d'y former une protection interne sont déjà connues.

Ainsi, une solution aqueuse de phosphates de sodium et de potassium est décrite dans le document précité FR-A-2 685 694. Toutefois, un inconvénient de la protection interne obtenue réside dans sa sensibilité à l'humidité. Or, il est préférable, pour des disques de frein, de rendre la protection interne très résistante à la corrosion par l'eau.

Ce même inconvénient se retrouve avec le verre à base phosphate obtenu conformément au procédé décrit dans le document US-A-3 351 447 précité. En effet, ce verre contient bien une certaine quantité d'oxyde modificateur ZnO, mais en proportion très insuffisante pour le rendre insensible à l'humidité. Or, le mode opératoire décrit dans ce document ne permet pas d'augmenter la quantité d'oxyde de zinc dans le verre, par augmentation de la proportion d'oxyde de zinc ou de son précurseur, sous forme de phosphate de zinc, dans la solution d'imprégnation, celle-ci devenant alors instable avec formation de précipités de phosphates.

Avantageusement, la composition d'imprégnation est élaborée de manière à contenir, en solution aqueuse, les précurseurs d'une composition verrière à base phosphate dont la composition exprimée en moles d'oxydes, est la suivante :
20 à 60 % de P₂O₅, de préférence 20 à 50 %
10 à 30 % de ZnO,
10 à 30 % de Na₂O,
0 à 20 % d'au moins un oxyde choisi parmi CuO, CoO, NiO, FeO, MgO et PbO,
0 à 15 % d'au moins un oxyde de métal alcalin choisi parmi Li₂O et K₂O,
0 à 20 %, de préférence 0 à 15 %, d'au moins un oxyde choisi parmi Bi₂O₃, Al₂O₃ et B₂O₃, et
0 à 5 % d'au moins un oxyde choisi parmi V₂O₅ et TiO₂.,

Le rapport molaire entre oxydes modificatcurs du verre, comprenant ZnO, et oxydes formateurs du verre, comprenant essentiellement ou seulement P₂O₅, est de préférence choisi à une valeur suffisamment élevée pour conférer à la composition verrière une bonne résistance à la corrosion par l'humidité.

Le rapport molaire entre oxydes modificateurs et oxydes formateurs de verre qu'il est nécessaire d'atteindre pour obtenir une résistance élevée à la corrosion par l'humidité dépend de la nature des constituants de la composition verrière, notamment des oxydes modificateurs présents avec l'oxyde de zinc. Dans un système ZnO/P₂O₅, le rapport molaire entre ZnO et P₂O₅ doit être de préférence supérieur à 1. En effet, la vitesse de corrosion est divisée par un facteur d'environ 100 lorsque le rapport molaire entre ZnO et P₂O₅ passe d'une valeur légèrement inférieure à 1 à une valeur légèrement supérieure à 1. Dans un système comportant, outre ZnO et P₂O₅, d'autres oxydes formateurs et/ou modificateurs, la valeur minimale du rapport molaire entre oxydes modificateurs et oxydes formateurs peut être inférieure à 1. Il apparaît toutefois préférable que ce rapport soit en toutes circonstances au moins égal à 0,6, et, mieux encore, au moins égal à 0,9.

Le choix du phosphate dissous en premier dans l'eau est essentiel pour permettre ensuite la dissolution de la quantité voulue de sels précurseurs des oxydes modificateurs, de même que pour atteindre une concentration élevée de tous les précurseurs dans la solution, sans compromettre la stabilité de celle-ci. L'utilisation d'acide phosphorique est alors exclue, celui-ci n'offrant pas la possibilité d'obtenir une solution stable avec les proportions et concentrations souhaitées de sels précurseurs d'oxydes modificateurs. Ainsi, alors que dans le document US-A-3 351 477 précité une concentration élevée de précurseurs dans la solution d'imprégnation est recherchée sans compromettre la stabilité de la solution, le fait de dissoudre en premier de l'acide phosphorique fait que le rapport molaire entre ZnO et P₂O₅ n'atteint que 0,5, c'est-à-dire une valeur largement insuffisante pour conférer à la protection interne obtenue une bonne résistance à la corrosion par l'humidité. De plus, l'acide phosphorique pose des problèmes de stabilité lors du traitement thermique et sa présence résiduelle dans le verre tend encore à limiter la résistance à l'humidité.

De préférence, le phosphate dissous en premier est un polyphosphate, avantageusement du métaphosphate de sodium ou du trimétaphosphate de sodium, qui permet la mise en solution de la proportion nécessaire de précurseurs par complexation des cations introduits ultérieurement..

Le sel précurseur de l'oxyde de zinc, de préférence du nitrate de zinc ou du sulfate de zinc est introduit en second dans la solution.

Il est ainsi possible d'obtenir une solution totale d'imprégnation stable tout en ayant une concentration élevée en précurseurs de la base verrière, la proportion en masse de ces précurseurs dans la solution pouvant être égale ou supérieure à 50 %.

La viscosité de la solution doit toutefois être suffisamment faible pour permettre une imprégnation en profondeur du matériau, même lorsque la porosité ouverte accessible est de petites dimensions, comme c'est le cas pour des carbones et graphites massifs ou des composites contenant du carbone. Comme déjà indiqué, la viscosité est typiquement comprise entre 0,1 et 10 dPa.s, de préférence entre 0,1 et 1 dPa.s

La stabilité de la solution peut encore être améliorée en maintenant une acidité suffisante, de préférence un pH inférieur à 0,5. Cette acidité est assurée en choisissant des précurseurs complémentaires de façon adéquate, par exemple le dihydrogénophosphate de potassium.

Toujours dans le but d'améliorer la stabilité, il est possible d'ajouter aux précurseurs un ou plusieurs agents stabilisants organiques ayant un caractère fugitif, c'est-à-dire qui s'éliminent totalement lors du traitement thermique final. De tels agents stabilisants fugitifs sont notamment les acides oxalique, tartrique et citrique.

D'autres précurseurs sont ajoutés à la solution en fonction de la composition souhaitée de la composition verrière, par exemple des précurseurs d'oxydes tels que : oxydes de cuivre, de cobalt, de nickel, de fer, de magnésium et/ou de plomb, des précurseurs d'oxydes de lithium et/ou de potassium, des précurseurs des oxydes de bismuth, d'aluminium et/ou de bore et des précurseurs des oxydes de vanadium et/ou de titane.

Pour atteindre la proportion voulue d'anhydride phosphorique dans la composition verrière, un précurseur de cet oxyde peut être ajouté dans la solution, par exemple du phosphate d'ammonium.

Des modes particuliers de mise en oeuvre de la présente invention seront maintenant décrits à titre indicatif, mais non limitatif, en référence aux dessins annexés sur lesquels :
- la figure 1 représente de façon éclatée un ensemble de disques stators et de disques rotors pour un frein à disques multiples,
- la figure 2 est une vue de détail à échelle agrandie d'une partie du diamètre extérieur d'un disque stator de la figure 1,
- la figure 3 est une vue de détail à échelle agrandie d'une partie du diamètre intérieur d'un disque rotor de la figure 1,
- la figure 4 est une vue schématique illustrant un premier mode de mise en oeuvre du procédé selon l'invention,
- la figure 5 est une vue partielle à échelle agrandie et en coupe de l'ensemble de disques de la figure 4 ayant leurs faces frottantes masquées et montés dans un outillage,
- la figure 6 est une vue de détail en coupe montrant une première variante de réalisation du masquage d'une face frottante d'un disque,
- la figure 7 est une vue de détail en coupe montrant une deuxième variante de réalisation du masquage d'une face frottante d'un disque,
- la figure 8 est une vue schématique illustrant une variante du premier mode de mise en oeuvre du procédé selon l'invention,
- la figure 9 est une vue schématique illustrant un deuxième mode de mise en oeuvre du procédé selon l'invention,
- la figure 10 est une vue schématique illustrant un troisième mode de mise en oeuvre du procédé selon l'invention,
- la figure 11 est une vue schématique illustrant un quatrième mode de mise en oeuvre du procédé selon l'invention,
- la figure 12 est une vue de détail partielle en coupe illustrant la réalisation d'une dépression au sein de la porosité interne ouverte d'un disque de la figure 11, et
- la figure 13 est une vue de détail en coupe d'un disque de frein muni d'une protection interne anti-oxydation par un procédé conforme à l'invention.

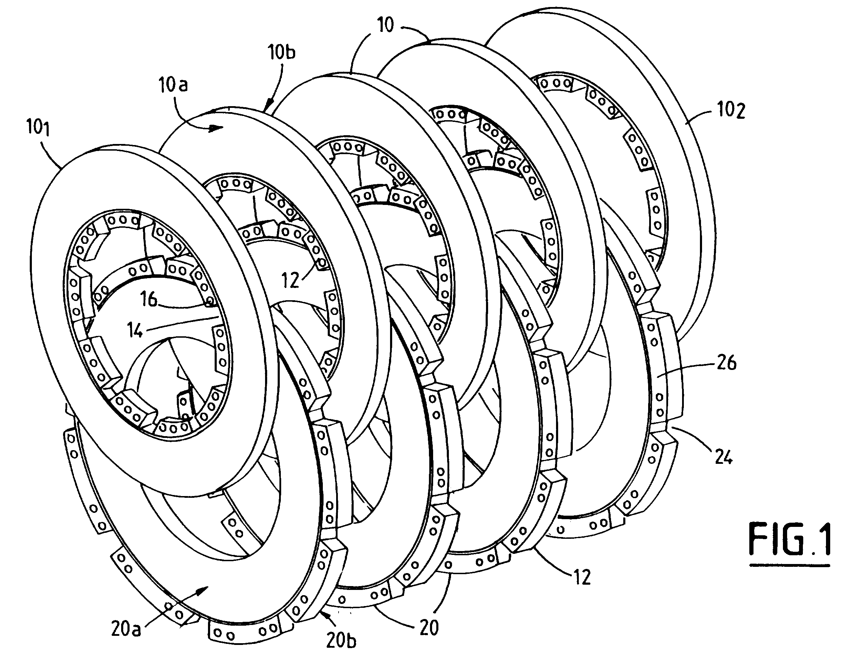

Un frein à disques multiples en matériau composite contenant du carbone, par exemple en matériau composite carbone-carbone, notamment destiné à former un frein d'avion, comprend des disques stators 10 alternant avec des disques rotors 20, comme montré par la figure 1.

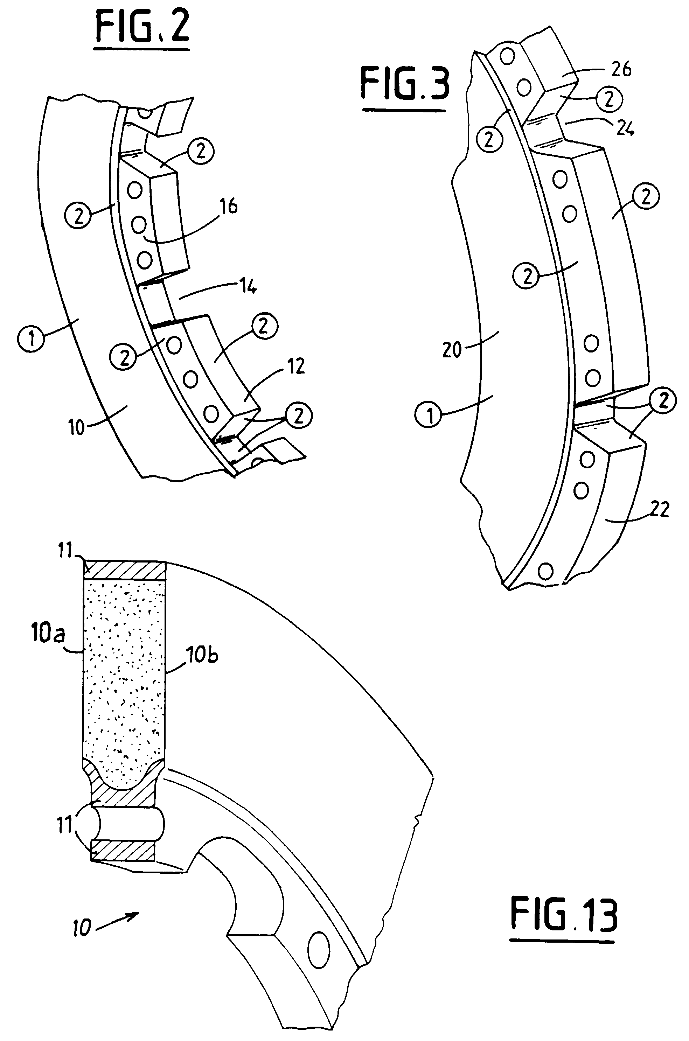

Les disques stators 10 (figures 1 et 2) présentent deux faces annulaires opposées 10a, 10b et, le long de leur circonférence intérieure, une couronne 12 avec des crantages ou encoches 14 destinés à coopérer avec des cannelures d'un moyeu fixe (non représenté). Les créneaux 16 entre deux encoches peuvent être munis de trous destinés à permettre la fixation éventuelle d'étriers métalliques, de façon connue en soi. A l'exception des disques stators d'extrémité 10₁ et 10₂, chaque disque stator a ses faces opposées 10a, 10b qui constituent des faces frottantes. Les disques stators d'extrémité 10₁ et 10₂ ont seulement leurs faces intérieures qui sont frottantes. Les faces extérieures sont destinées à coopérer avec des plateaux (non représentés) d'un dispositif hydraulique provoquant le serrage mutuel des disques lors de la commande de freinage.

Les disques rotors 20 (figures 1 et 3) présentent deux faces frottantes annulaires opposées 20a, 20b et, le long de leur circonférence extérieure, une couronne 22 avec des crantages ou encoches 24 destinés à coopérer avec des cannelures internes d'un manchon (non représenté) solidaire en rotation d'une roue. Les créneaux 26 entre deux encoches peuvent être munis de trous destinés à permettre la fixation éventuelle d'étriers métalliques, de façon connue en soi.

Sur les figures 1, 2 et 3, la référence 1, dans un cercle, désigne une face frottante tandis que la référence 2, dans un cercle, désigne une partie de surface non frottante. Constituent les parties non frottantes l'ensemble des surfaces des disques à l'exception des faces frottantes.

Conformément à l'invention, une protection interne anti-oxydation est mise en place par imprégnation de la porosité interne ouverte des disques, après masquage des faces frottantes.

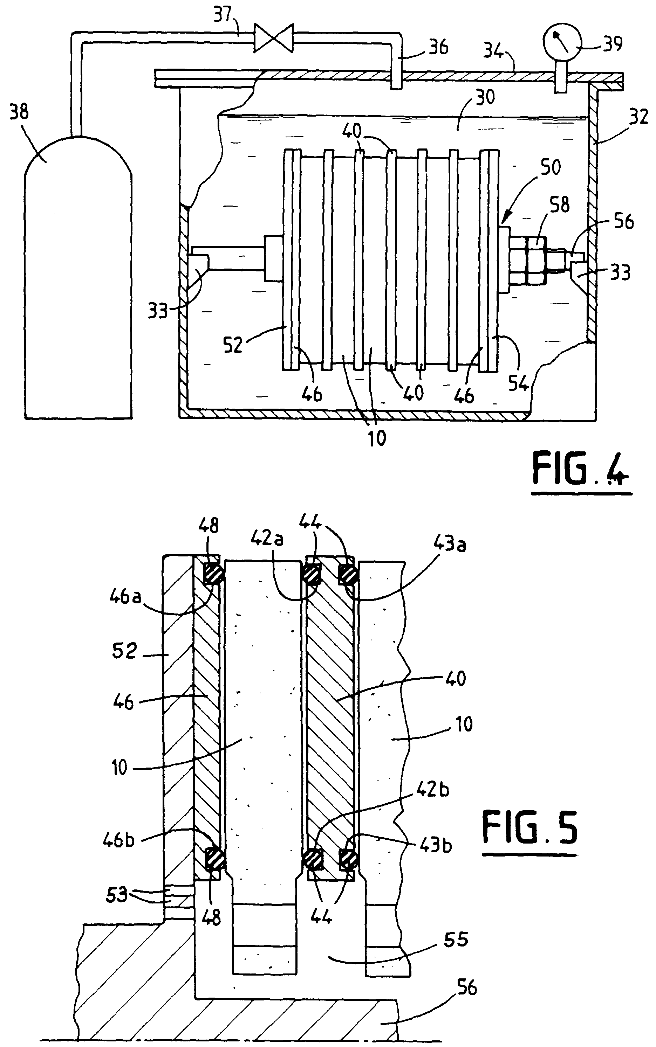

Selon le mode de mise en oeuvre illustré par la figure 4, un ensemble de disques stators 10 est immergé dans un bain 30 d'une composition d'imprégnation, à l'intérieur d'un bac 32. Les disques 10 ont leurs faces frottantes masquées de façon étanche aux liquides au moyen de plaques intercalaires 40 et d'extrémité 46. Les plaques 40, 46 sont appliquées de façon étanche au moins le long des bords extérieurs et intérieurs des faces frottantes au moyen d'un outillage 50 qui enserre les disques disposés coaxialement. L'outillage 50 comprend deux plateaux 52, 54 qui sont appliqués contre les plaques d'étanchéité 46 disposées aux extrémités de l'ensemble de disques. Les plateaux 52, 54 sont reliés par une tige axiale 56 solidaire d'un (52) des plateaux et traversant les passages axiaux des disques et un orifice central formé dans l'autre plateau (54). L'extrémité de la tige 56 est filetée pour permettre le serrage mutuel des plateaux par des écrous 58. L'outillage 50 repose sur des supports 33 solidaires des parois du bac 32.

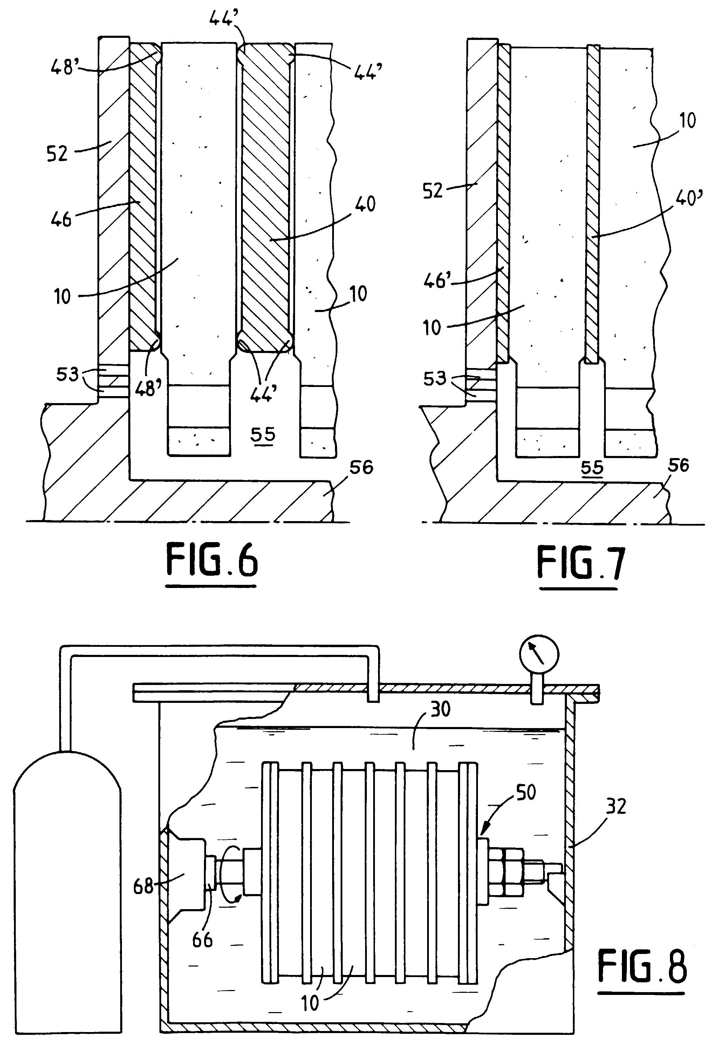

Comme montré plus en détail sur la figure 5, les plaques d'étanchéité 46 sont des plaques rigides annulaires étanches, par exemple en métal, matière plastique ou matière composite. Elles présentent des gorges annulaires 46a, 46b au voisinage de leurs circonférences intérieure et extérieure, sur leurs faces tournées vers les disques. Des joints d'étanchéité toriques 48 en caoutchouc sont logés dans les gorges 46a, 46b et sont appliqués de façon étanche contre les bords intérieur et extérieur des faces frottantes adjacentes.

La figure 5 montre des passages 53 formés à travers le plateau 52 pour permettre l'accès de la composition d'imprégnation à l'espace 55 compris entre la tige axiale 56 et l'ensemble des disques et plaques d'étanchéité annulaires entourant cette tige. Des passages similaires peuvent être formés à travers le plateau 54. En variante, l'accès de la composition d'imprégnation à l'espace 55, du côté des bords intérieurs des disques, pourra être ménagé à travers des perçages radiaux dans la tige 56.

Les plaques d'étanchéité intercalaires 40 sont des plaques rigides annulaires étanches, également en métal ou en matière plastique ou composite. Elles présentent, sur chaque face, des gorges annulaires 42a, 42b , et 43a, 43b au voisinage de leurs circonférences intérieure et extérieure. Des joints d'étanchéité toriques 44 en caoutchouc sont logés dans les gorges 42a, 42b, 43a, 43b et sont appliqués de façon étanche contre les bords intérieur et extérieur des faces frottantes adjacentes.

Tant au voisinage de la circonférence intérieure qu'au voisinage de la circonférence extérieure, les plaques 40 et 46 débordent légèrement des faces frottantes adjacentes.

En variante, comme montré par la figure 6, les plaques d'extrémité 46 sont munies, sur leurs faces tournées vers les disques, de bourrelets élastiques 48'. Ceux-ci sont réalisés en une seule pièce avec les plaques 46, par exemple par moulage de caoutchouc, ou sont collés sur les plaques 46, celles-ci étant ou non rigides. De la même façon, les plaques intercalaires 40 sont munies, sur chaque face, de bourrelets élastiques 44' réalisés en une seule pièce avec les plaques 40, par exemple par moulage de caoutchouc, ou collés sur les plaques 40, celles-ci étant ou non rigides. Les bourrelets 48', 44' sont situés le long des circonférences intérieure et extérieure des plaques 46, 40. Ils peuvent avoir, à l'état non déformé, une section rectangulaire ou arrondie.

Toujours en variante, comme montré par la figure 7, les plaques d'extrémités 46' et intercalaires 40' sont constituées simplement par des feuilles annulaires élastiquement déformables, par exemple en caoutchouc. Il est alors important de distribuer correctement la pression de serrage pour assurer l'étanchéité le long des circonférences intérieure et extérieure des plaques d'étanchéité.

Il serait encore envisageable de réaliser l'étanchéité de chaque face frottante en formant sur celle-ci un revêtement de surface, par exemple par pistolettage ou pulvérisation d'une couche non poreuse, ou par étalement et séchage d'une couche de caoutchouc pâteux qui peut ultérieurement être pelée.

Dans l'installation de la figure 4, l'imprégnation des disques dans le bain 30 est réalisée sous pression. A cet effet, le bac 32 est fermé de façon étanche par un couvercle 34 à travers lequel passe une canalisation 36 reliant le bac 32 à une source de pression 38 à travers une vanne 37. Un manomètre 39 permet de mesurer la pression à l'intérieur du bac 32. L'ouverture de la vanne 37 permet d'exercer sur les parties de surfaces exposées des disques, c'est-à-dire toutes les parties de surfaces non masquées, une pression supérieure à celle régnant initialement à l'intérieur de la porosité interne des disques. Cette différence de pression dP provoque la pénétration de la composition d'imprégnation au sein des disques, à partir des surfaces exposées, jusqu'à équilibrage des pressions entre les surfaces exposées et le coeur de la porosité interne des disques dans laquelle l'air contenu initialement est toujours présent. La profondeur de pénétration est fonction du volume initial de la porosité interne ouverte des disques et de la différence de pression dP. Pour des disques donnés, la différence de pression dP est donc ajustée afin d'avoir une profondeur de pénétration désirée. Celle-ci doit être suffisante, pour permettre la formation d'une protection anti-oxydation interne en profondeur, tout en restant limitée pour éviter d'imprégner de façon significative la porosité interne adjacente aux faces frottantes masquées. Selon les dimensions des disques, la profondeur de pénétration est comprise entre environ 2 mm et environ 10 mm.

La surpression dans le bac 32 est maintenue pendant une durée suffisante pour assurer l'imprégnation sur la profondeur voulue, par exemple au moins pendant 5 minutes.

Après l'imprégnation, les disques sont retirés du bain 30. Il existe, avant le retrait des disques, une pression au coeur des disques supérieure à la pression ambiante. Le rééquilibrage des pressions s'exerce, après retrait des disques, à travers une macroporosité, en pratique toujours présente, du matériau du disque. Les forces capillaires et tensions de surface sont suffisantes, en raison de la faible dimension de la porosité imprégnée, pour s'opposer à l'expulsion de la composition d'imprégnation ayant pénétré la porosité des disques. Il est toutefois préférable de conférer à la composition d'imprégnation une viscosité pas trop faible, de préférence supérieure à 0,1 dPa.s. Cette viscosité ne doit en revanche pas être trop élevée pour ne pas rendre l'imprégnation difficile, c'est-à-dire être inférieure à 10 dPa.s, de préférence inférieure à 1 dPa.s..

Lorsque la composition d'imprégnation est formée de constituants de la protection interne à l'état fondu, il suffit d'attendre la solidification.

Lorsque la composition d'imprégnation est formée de précurseurs de la protection interne en suspension ou en solution les disques imprégnés sont séchés, par exemple par passage en étuve puis soumis à un traitement thermique de transformation des précurseurs. Dans le cas de compositions verrières à base phosphate, le traitement thermique est généralement effectué en élevant progressivement la température jusqu'à environ 350 °C à 950 °C.

Lorsqu'une profondeur d'imprégnation constante et uniforme est souhaitée, il est nécessaire de compenser la variation de pression régnant dans le bac en fonction de la profondeur. A cet effet, comme montré par la figure 8, les disques sont montés coaxialement avec leur axe horizontal, et l'outillage 50 est couplé à l'arbre de sortie 66 d'un moteur immergé 68 qui entraîne les disques en rotation lente autour de leur axe.

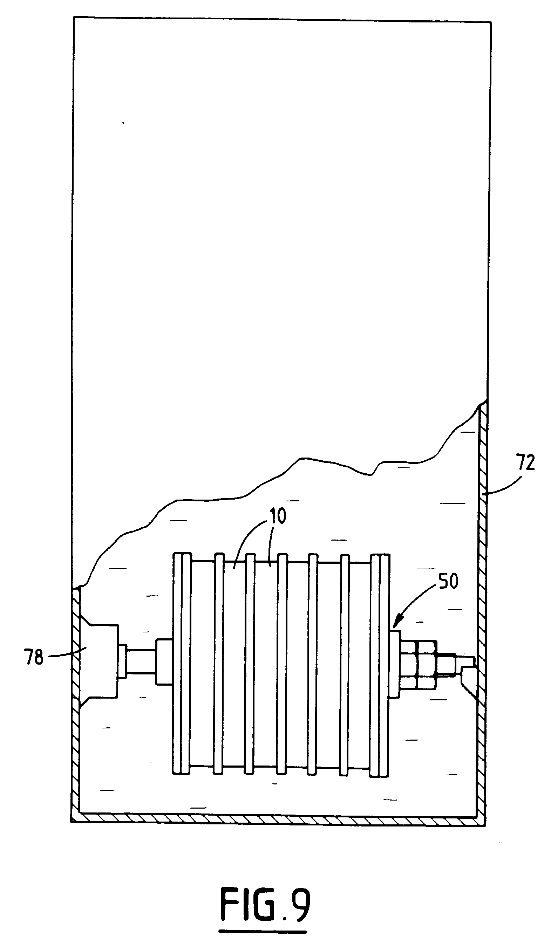

Une profondeur d'imprégnation suffisante peut être obtenue avec une différence de pression dP relativement peu importante, par exemple de l'ordre du dixième d'atmosphère (10⁴Pa). Une telle surpression peut être obtenue en immergeant les disques à une profondeur convenable dans un bac 72 rempli de composition d'imprégnation, comme montré par la figure 9. Les disques sont maintenus coaxialement dans l'outillage 50 qui est couplé à l'arbre de sortie d'un moteur immergé 78. L'entraînement des disques en rotation à l'intérieur du bain permet d'uniformiser la surpression s'exerçant sur les surfaces exposées des disques, donc d'uniformiser la profondeur d'imprégnation.

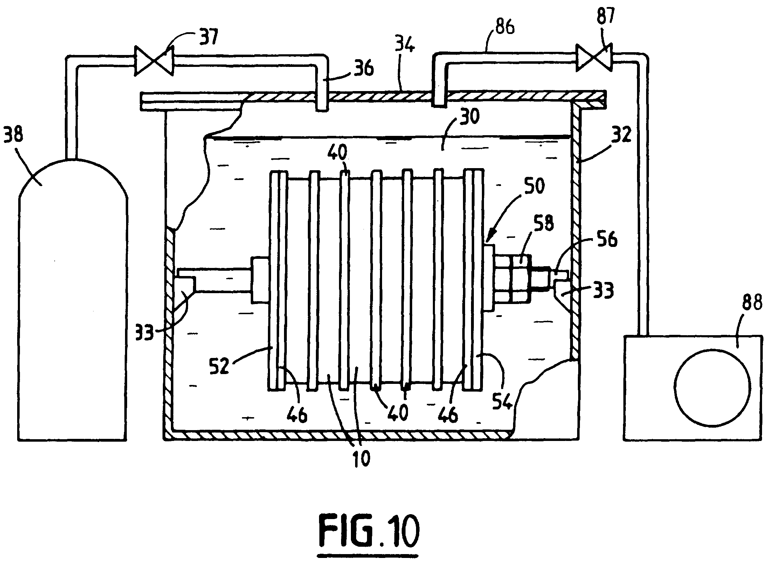

La différence de pression dP nécessaire à l'imprégnation peut être établie non pas seulement par une surpression exercée sur les surfaces exposées des disques, mais aussi au moins partiellement par une dépression établie au coeur de la porosité interne ouverte des disques, comme illustré par les figures 10 à 12.

Dans le mode de réalisation de la figure 10, des disques stators 10 à imprégner sont montés dans un outillage identique à celui de la figure 4 et immergés dans le bain 30. Les faces frottantes des disques sont masquées par deux plaques d'extrémité 46 munies de joints toriques 48 et des plaques intercalaires 40 munies de joints toriques 44. Les plaques d'étanchéité, identiques à celles des figures 4 et 5, sont appliquées contre les faces frottantes des disques par serrage de l'ensemble entre les plateaux 52, 54 de l'outillage 50.

Le bac 32 est fermé de façon étanche par le couvercle 34 à travers lequel passe une canalisation 86 reliant le bac 32 à une source de vide 88 à travers une vanne 87. Le bac 32 est également relié à la source de pression 38 au moyen de la canalisation 36 sur laquelle est montée la vanne 37, comme dans le mode de réalisation de la figure 4.

Après immersion des disques 10 maintenus dans l'outillage 50, avec leurs faces frottantes masquées, une dépression est établie dans le bac 32 en ouvrant la vanne 87, la vanne 37 étant fermée. Cette dépression est limitée afin de ne pas vider complètement la porosité interne des disques de l'air qui y était contenu initialement. Lorsque la pression dans le bac a été diminuée d'une valeur d'P, la vanne 87 est fermée et la vanne 37 est ouverte afin d'augmenter la pression dans le bac jusqu'à une valeur supérieure d'une quantité d"P à la pression ambiante initiale. On établit ainsi une différence de pression dP = d'P + d"P entre la porosité interne des disques et les surfaces exposées, différence de pression grâce à laquelle l'imprégnation est réalisée sur la profondeur voulue.

Il est possible, après établissement de la dépression et fermeture de la vanne 37 de ramener le bac 32 à la pression ambiante, sans y créer de surpression par rapport à celle-ci. La profondeur d'imprégnation est alors fonction de la différence de pression d'P.

Le fait qu'une pression inférieure à la pression ambiante soit établie au coeur de la porosité interne des disques avant le début de l'imprégnation, s'oppose à l'expulsion de la composition d'imprégnation hors des disques lorsque les disques sont retirés du bain d'imprégnation et qu'un rééquilibrage de pression s'opère entre l'intérieur et l'extérieur des disques..

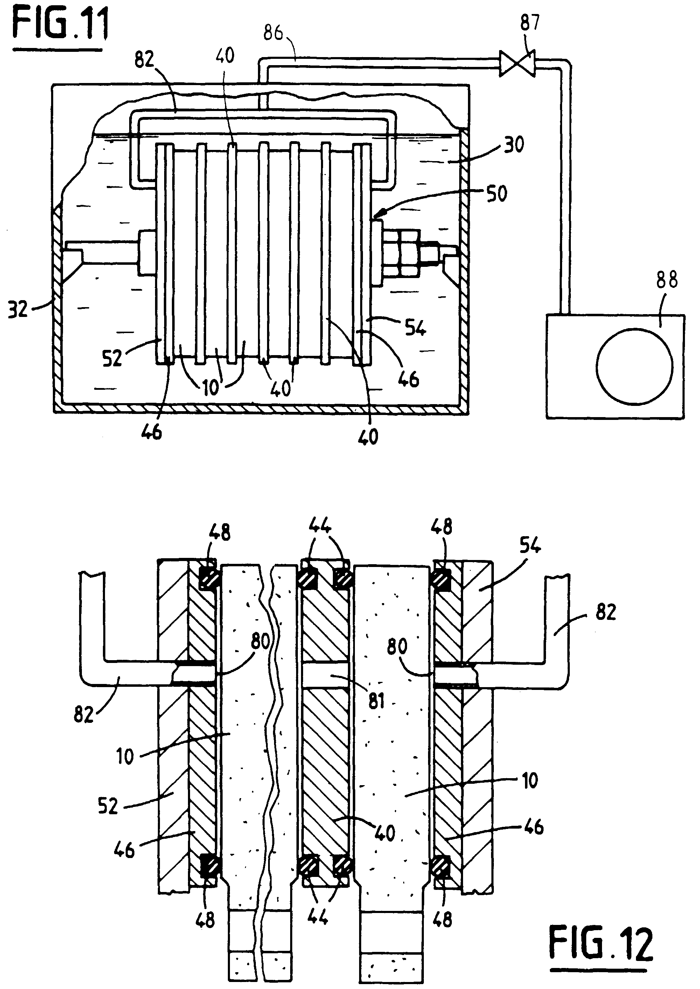

Dans le mode de réalisation des figures 11 et 12, des disques stators 10 à imprégner sont montés dans un outillage 50 semblable à celui de la figure 4 et immergés dans le bain 30. Les faces frottantes des disques sont masquées par deux plaques d'extrémité 46 munies de joints toriques 48 et une plaque intercalaire 40 munie de joints toriques 44. Les plaques d'étanchéité, semblables à celles des figures 4 et 5, sont appliquées contre les faces frottantes des disques par serrage de l'ensemble entre les plateaux 52, 54 de l'outillage 50.

Une prise étanche 80 est formée à travers chaque plaque d'extrémité 46 tandis que des passages 81 sont formés à travers les plaques intercalaires 40. Les prises étanches 80 sont reliées par des conduites 82 à une canalisation 86 connectée à une source de vide 88 par l'intermédiaire d'une vanne 87. Les prises 80 sont accessibles à travers des passages formés dans les plateaux 52, 54. L'ouverture de la vanne 87 permet de mettre en communication la source de vide avec l'espace compris entre chaque plaque d'extrémité 46 et la face frottante qui lui fait face et qui est isolée de façon étanche du bain de composition d'imprégnation. Par communication à travers les disques poreux et les passages 81, une dépression est ainsi établie au sein de la porosité interne ouverte de tous les disques, permettant l'imprégnation par la composition contenue dans le bain 30, celui-ci restant exposé à la pression ambiante.

Lorsque l'imprégnation est terminée, la vanne 87 est fermée, maintenant la dépression au sein de la porosité interne des disques. Le bain 30 est vidé, afin de permettre le séchage des disques. Le maintien de la dépression s'oppose à l'expulsion de la composition d'imprégnation hors de la porosité des disques, même avec une composition très fluide.

On notera qu'une seule prise étanche 80 à travers une des deux plaques d'extrémité 46 peut suffire pour mettre l'ensemble des porosités internes des disques en dépression. Il est également possible de prévoir une ou plusieurs prises latérales permettant d'accéder aux espaces entre plaques d'étanchéité intercalaires et faces frottantes adjacentes.

Dans les modes de réalisation décrits ci-dessus, le rendement d'imprégnation est plus élevé lorsque plusieurs disques sont imprégnés simultanément, mais la possibilité d'imprégner les disques individuellement n'est pas exclue.

Si l'on se reporte à nouveau à la figure 1, on constate qu'il est nécessaire de former une protection anti-oxydation du côté des faces extérieures des disques stators d'extrémité 10₁, 10₂. Ceux-ci peuvent ne pas être différenciés lors de l'imprégnation, de sorte que leurs faces extérieures sont masquées comme s'il s'agissait de faces frottantes. Après l'imprégnation et la formation de la protection interne, il est alors nécessaire de munir ces faces extérieures d'une protection anti-oxydation. Ceci peut être réalisé par dépôt d'un revêtement de protection de surface, de façon connue en soi.

Même lorsque les disques stators d'extrémité sont différenciés lors de l'imprégnation et placés par exemple aux extrémités de l'ensemble de disques immergé dans le bain de composition d'imprégnation, leurs faces extérieures non frottantes sont au moins en partie masquées par l'outillage de maintien des disques. Une protection spécifique sous forme d'un dépôt de revêtement de surface reste donc nécessaire. On peut toutefois faire en sorte que les portions des faces extérieures non frottantes masquées par l'outillage soient réduites, par exemple en utilisant des plateaux d'extrémités qui s'appuient très localement sur ces faces extérieures. Une infiltration substantielle à partir de celle-ci peut donc avoir lieu, avec formation d'une protection interne anti-oxydation, qui peut être complétée ensuite par une protection externe.

Il a été décrit ci-avant l'imprégnation de disques stators. Il apparaît immédiatement que l'imprégnation de disques rotors 20 peut être réalisée exactement de la même façon. Il est également possible, en utilisant des mêmes moyens de masquage des faces frottantes, d'imprégner simultanément un ensemble de disques stators et rotors.

En outre, il est clair que l'invention est applicable à la formation d'une protection interne anti-oxydation sur des disques de frein en matériau composite contenant du carbone autres que ceux destinés à des freins d'avion, par exemple des disques pour freins monodisques ou à disques multiples destinés à des véhicules terrestres.

A titre d'exemple non limitatif, l'imprégnation des disques de frein est réalisée avec une solution de sels précurseurs d'une composition verrière ayant des propriétés autocicatrisantes aux températures de service des disques, telle qu'une composition verrière à base phosphate.

De préférence, la protection interne est constituée par une composition verrière ayant, exprimée en pourcentages de moles d'oxydes, la composition suivante :
20 à 60 % de P₂O₅, de préférence 20 à 50 %,
10 à 30 % de ZnO,
10 à 30 % de Na₂O,
0 à 20 % d'au moins un oxyde choisi parmi CuO, CoO, NiO, FeO, MgO et PbO,
0 à 15 % d'au moins un oxyde de métal alcalin choisi parmi Li₂O et K₂O,
0 à 20 %, de préférence 0 à 15 %, d'au moins un oxyde choisi parmi Bi₂O₃, Al₂O₃ et B₂O₃, et
0 à 5 % d'au moins un oxyde choisi parmi V₂O₅ et TiO_{2.}

Comme déjà indiqué, pour conférer à la composition verrière une bonne résistance à la corrosion par l'humidité, il est préférable que le rapport molaire entre oxydes modificateurs et oxydes formateurs, principalement ou uniquement P₂O₅, soit au moins égal à 0,6 et de préférence au moins égal à 0,9.

Il est alors recommandé, pour obtenir une solution aqueuse d'imprégnation stable, sans formation de précipités de phosphates, de procéder à la réalisation de la solution en commençant par dissoudre dans l'eau un polyphosphate apte à permettre ensuite, par complexation, la mise en solution de la quantité nécessaire de sels précurseurs des oxydes modificateurs, en atteignant une concentration élevée de sels précurseurs dans la solution. Le polyphosphate dissous en premier est avantageusement du métaphosphate ou trimétaphosphate de sodium. Le sel de zinc ajouté ensuite est de préférence du nitrate de zinc ou du sulfate de zinc.

D'autres précurseurs sont ajoutés à la solution en fonction de la composition souhaitée de la composition verrière et/ou pour lui conférer l'acidité voulue.

Deux exemples pratiques de mise en oeuvre de la présente invention seront maintenant décrits.

### Exemple 1

On réalise de façon classique des disques stators de frein d'avion en carbone-carbone ayant des diamètres intérieur et extérieur égaux à 247 mm et à 420 mm, une épaisseur égale à 26 mm et une porosité interne résiduelle d'environ 10 % en volume. Après usinage des crantages sur la couronne interne des disques, six de ces disques sont assemblés coaxialement au moyen d'un outillage 50 tel qu'illustré à la figure 4. Les faces frottantes des disques sont masquées de façon étanche aux liquides au moyen de plaques annulaires d'étanchéité d'extrémité 46 et intercalaires 40 munies de joints toriques d'étanchéité en caoutchouc comme illustré par les figures 4 et 5. Les plaques 46 et 40 sont en alliage d'aluminium avec revêtement en PTFE (polytétrafluoroéthylène). Leurs diamètres intérieur et extérieur sont respectivement égaux à 270 mm et à 430 mm tandis que ceux des faces frottantes des disques sont respectivement égaux à 280 mm et à 420 mm.

Les disques montés dans l'outillage 50 sont immergés dans un bain 30 constitué par une solution aqueuse de précurseurs d'un verre à base phosphate. La solution a la composition suivante, en pourcentage massique (le chiffre entre parenthèses indique l'ordre d'introduction des précurseurs des oxydes constitutifs du verre) :

| | |
|---|---|
| H₂O | 42,5 % |
| NaPO₃ (1) | 16,6 % |
| Zn (NO₃)₂ 6H₂O (2) | 20,7 % |
| KH₂PO₄ (3) | 6,5 % |
| H₃BO₃ (4) | 1,6 % |
| H₆NPO₄ (5) | 12,1 % |

L'acidité de la solution est contrôlée notamment par le dihydrogénophosphate de potassium KH₂PO₄. Dans cet exemple, le pH de la solution est de 0,3 environ.

Les disques sont maintenus immergés dans le bain 30 pendant 5 minutes tandis qu'une surpression (dP) de 10⁴Pa (0,1 atmosphère) est établie à l'intérieur du bac 32 par rapport à la pression ambiante initiale. Une imprégnation de la solution ci-dessus est alors réalisée sur une profondeur moyenne d'environ 5 mm à partir des surfaces exposées des disques.

Les disques imprégnés sont extraits du bain, libérés de l'outillage 50 et séchés en étuve avant d'être traités thermiquement sous atmosphère neutre à une température d'environ 750°C.

Il est formé alors une protection interne anti-oxydation constituée par un verre à base phosphate (verre 1) ayant, exprimée en pourcentages molaires d'oxydes, la composition suivante :

| | |
|---|---|
| P₂O₅ | 45,6 % |
| ZnO | 20,2 % |
| Na₂O | 23,5 % |
| K₂O | 6,9 % |
| B₂O₃ | 3,8 %, |

ce qui donne un rapport molaire d'environ 1,02 entre oxydes modificateurs de verre et oxydes formateurs de verre (P₂O₅ et B₂O₃).

La figure 13 illustre, en coupe, la localisation de la protection interne anti-oxydation (zones hachurées) au droit des parties de surface non frottante d'un disque 10 ainsi obtenu. La protection interne 11 est légèrement présente aux bords des faces frottantes 10a, 10b situées à la limite des parties non frottantes. Cette présence limitée n'est pas préjudiciable aux caractéristiques tribologiques.

Afin de mesurer l'efficacité de la protection interne ainsi obtenue, on utilise des éprouvettes en matériau composite carbone-carbone identique au matériau des disques ci-dessus. Une partie des éprouvettes est imprégnée avec la solution aqueuse décrite ci-dessus, précurseur du même verre à base phosphate. Après séchage et traitement thermique dans les mêmes conditions, la masse relative du verre formé au sein des éprouvettes est de 2 %.

Une partie des éprouvettes munies de la protection interne est polluée par de l'acétate de potassium, catalyseur de l'oxydation du carbone.

Des éprouvettes A munies de la protection interne anti-oxydation et polluées par l'acétate de potassium, des éprouvettes B munies de la protection interne anti-oxydation mais non polluées par l'acétate de potassium sont maintenues pendant 5 heures à 650°C sous air. Un traitement d'oxydation identique est appliqué à de mêmes éprouvettes non munies de la protection anti-oxydation, certaines non polluées par l'acétate de potassium (éprouvettes C) et d'autres polluées par l'acétate de potassium (éprouvettes D). A la fin de ce traitement d'oxydation, la perte de masse relative moyenne est mesurée pour chaque série d'éprouvettes. Les résultats obtenus sont :
- éprouvettes A : 0,1 %
- éprouvettes B : 0,3 %
- éprouvettes C : 5%.
- éprouvettes D : 99 %.

L'efficacité de la protection interne anti-oxydation est ainsi démontrée, même en présence de catalyseur. Or, la faculté de protéger tant de l'oxydation du carbone que de l'oxydation catalytique du carbone est importante dans le cas de disques de freins, notamment de disques de freins d'avion. Ceux-ci sont en effet sujets à pollution par des catalyseurs d'oxydation du carbone tels que le sel marin ou des produits de dégivrage de pistes.

La résistance à la corrosion par l'humidité est mesurée en maintenant pendant 16 heures dans de l'eau à température ambiante des éprouvettes munies de protection interne anti-oxydation identiques aux éprouvettes B ci-dessus. La vitesse de corrosion mesurée en pourcentage de perte massique est égale à 1,87 %/heure.

A titre de comparaison, la vitesse de corrosion mesurée dans les mêmes conditions, avec des mêmes éprouvettes en carbone-carbone munies d'une protection interne obtenue par l'imprégnation par une solution aqueuse de phosphates de sodium et de potassium, comme décrit dans le document FR-A-2 685 694, est de 10 %/minute.

### Exemple 2

On procède comme dans l'exemple 1 si ce n'est qu'à la solution d'imprégnation on ajoute une solution concentrée à 50 % de dihydrogénophosphate d'aluminium AlH₂PO₄ dans une proportion en masse de 30 %. Après traitement thermique, on obtient une protection interne constituée par une composition verrière (verre 2) dont la composition, exprimée en pourcentages molaires d'oxydes, est la suivante :

| | |
|---|---|
| P₂O₅ | 46,3 % |
| ZnO | 16,2 % |
| Na₂O | 20,3 % |
| K₂O | 5,9 % |
| B₂O₃ | 3,3 % |
| Al₂O₃ | 7 %, |

ce qui donne un rapport molaire d'environ 1,02 entre oxydes modificateurs et oxydes formateurs (P₂O₅ et B₂O₃).

Afin de tester l'efficacité de la protection contre l'oxydation de même que la résistance à la corrosion par l'eau de la protection interne ainsi réalisée, on procède à une mise en oeuvre sur des éprouvettes en matériau composite carbone-carbone identique au matériau des disques de l'exemple 1. Des éprouvettes I sont munies d'une protection interne constituée par le verre 1 (exemple 1) tandis que des éprouvettes II sont munies d'une protection interne constituée par le verre 2 (exemple 2), suivant le processus décrit dans l'exemple 1.

Les éprouvettes ainsi traitées sont maintenues pendant 16 heures dans de l'eau à température ambiante. Les vitesses de corrosion des verres mesurées en pourcentage de perte massique sont :
- pour les éprouvettes I (verre 1): : 1,87 % / heure
- pour les éprouvettes II (verre 2) : 0,03 % / heure.

La présence d'alumine apporte une amélioration sensible de la résistance à la corrosion par l'eau.

De mêmes éprouvettes sont maintenues pendant 15 heures à 650° C sous air. Les pertes de masse relative mesurées sont les suivantes :
- pour les éprouvettes I (verre 1) : 0,38 %
- pour les éprouvettes II (verre 2) : 0,31 %.

On constate que le pouvoir de protection contre l'oxydation est conservé (voire même légèrement amélioré) tout en accroissant de façon significative la résistance à l'humidité.

Bien que l'on ait envisagé dans l'exemple 1 d'effectuer le traitement thermique sous atmosphère neutre, celui-ci pourrait être réalisé sous atmosphère réactive, par exemple nitrurante, sous un mélange d'ammoniac et d'hydrogène (NH₃ + H₂), la nitruration du verre pouvant encore améliorer sa résistance à la corrosion par l'humidité.

Les exemples qui précèdent démontrent l'efficacité de la protection interne contre l'oxydation et l'oxydation catalytique du carbone, efficacité alliée à une résistance élevée à la corrosion par l'humidité.

Cela n'exclut pas la possibilité d'associer à cette protection interne une protection externe anti-oxydation sous forme d'un revêtement de surface ancré dans la porosité superficielle des parties de surface non frottantes du disque. Cette protection externe, de préférence compatible avec la protection interne, est réalisée par exemple par pistolettage ou étalement à la brosse d'une composition sous forme d'une solution ou d'une suspension de précurseurs de la protection externe qui, après séchage, est soumise à un traitement thermique. La composition contenant les précurseurs de la protection externe peut être mise en oeuvre après imprégnation par la composition précurseur de la protection interne et éventuellement séchage, les protections interne et externe étant ensuite générées par un même traitement thermique.

Afin d'assurer une compatibilité physico-chimique entre les protections internes et externes, il est avantageux d'utiliser pour la composition précurseur de la protection externe une composition analogue à la composition d'imprégnation précurseur de la protection externe. Divers constituants pourront toutefois être ajoutés, en suspension ou en solution, pour conférer à la protection externe des propriétés spécifiques. C'est ainsi que des oxydes réfractaires, par exemple de la silice (SiO₂) sous forme colloïdale, peuvent être ajoutés pour conférer à la protection externe une tenue à des températures plus élevées, par rapport à la protection interne, élargissant ainsi la plage de température d'utilisation pour le disque.

Une telle protection externe peut être utilisée pour les faces non frottantes, opposées aux faces frottantes, de disques stators situés aux extrémités d'un frein multidisques.

## Revendications

1. Procédé pour l'application d'une protection anti-oxydation sur un disque de frein en un matériau composite contenant du carbone présentant une porosité interne résiduelle ouverte, caractérisé en ce qu'il comprend les étapes qui consistent à :
- masquer chaque face frottante du disque de frein pour l'isoler de l'extérieur de façon étanche aux liquides,
- immerger ensuite le disque de frein dans un bain d'une composition d'imprégnation contenant au moins un produit susceptible de permettre la formation d'une couche de protection anti-oxydation, et
- réaliser une imprégnation en établissant une différence entre la pression à l'extérieur des surfaces exposées du disque de frein immergé et la pression à l'intérieur de la porosité interne ouverte du disque de frein, sans vider totalement celle-ci de l'air qu'elle contient, de façon à forcer la composition d'imprégnation à pénétrer au sein de la porosité interne ouverte du disque sur une certaine profondeur à partir des surfaces exposées, afin d'y permettre la formation d'une protection interne anti-oxydation.

2. Procédé selon la revendication 1, caractérisé en ce que la différence de pression est ajustée en fonction de la profondeur souhaitée de pénétration de la composition d'imprégnation dans la porosité interne ouverte.

3. Procédé selon la revendication 2, caractérisé en ce que la différence de pression est ajustée pour permettre la pénétration de la composition d'imprégnation sur une profondeur comprise entre environ 2 mm et environ 10 mm.

4. Procédé selon l'une quelconque des revendications 1 à 3, caractérisé en ce que l'on établit à l'extérieur des surfaces exposées du disque de frein immergé une pression supérieure à la pression ambiante régnant initialement au sein de la porosité interne ouverte du disque de frein.

5. Procédé selon la revendication 4, caractérisé en ce que le disque de frein est immergé dans le bain à l'intérieur d'une enceinte dans laquelle une surpression est établie.

6. Procédé selon la revendication 5, caractérisé en ce que le disque de frein immergé dans le bain est surmonté d'une hauteur de liquide fonction de la pression supérieure à établir.

7. Procédé selon l'une quelconque des revendications 1 à 6, caractérisé en ce que la composition d'imprégnation a une viscosité comprise entre environ 0,1 dPa.s et environ 10 dPa.s.

8. Procédé selon l'une quelconque des revendications 1 à 7, caractérisé en ce que l'on établit au sein de la porosité interne ouverte du disque de frein, sans la vider totalement, une pression inférieure à la pression ambiante qui y régnait initialement.

9. Procédé selon la revendication 8, caractérisé en ce que le disque de frein est immergé dans le bain à l'intérieur d'une enceinte et l'on établit dans l'enceinte d'abord une première pression inférieure à la pression ambiante qui y régnait initialement et ensuite une deuxième pression supérieure à la première pression.

10. Procédé selon la revendication 9, caractérisé en ce que la deuxième pression est la pression ambiante.

11. Procédé selon la revendication 8, caractérisé en ce que la pression inférieure est établie en mettant en communication au moins une face frottante masquée du disque avec une source de vide.

12. Procédé selon l'une quelconque des revendications 8 et 11, caractérisé en ce que l'on maintient la pression inférieure au sein de la porosité interne du disque après la fin de l'imprégnation.

13. Procédé selon l'une quelconque des revendications 1 à 12, caractérisé en ce que le disque de frein est entraîné en rotation dans le bain de composition d'imprégnation autour d'un axe horizontal de manière à uniformiser la profondeur de pénétration de la composition d'imprégnation.

14. Procédé selon l'une quelconque des revendications 1 à 13, caractérisé en ce que le masquage d'une face frottante est réalisé au moyen d'une plaque appliquée de façon étanche aux liquides au moins sur le pourtour de la face frottante.

15. Procédé selon la revendication 14, caractérisé en ce que la plaque est rigide et est munie d'un joint d'étanchéité appliqué sur le pourtour de la face frottante.

16. Procédé selon la revendication 14, caractérisé en ce que la plaque comporte au voisinage de sa périphérie au moins un bourrelet formant joint d'étanchéité appliqué sur le pourtour de la face frottante.

17. Procédé selon la revendication 14, caractérisé en ce que la plaque est une feuille en matériau élastiquement déformable pressée contre la face frottante.

18. Procédé selon l'une quelconque des revendications 14 à 17, caractérisé en ce que la plaque est maintenue appliquée de façon étanche sur la face frottante au moyen d'un outillage.

19. Procédé selon l'une quelconque des revendications 1 à 18, caractérisé en ce que masquage d'une face frottante est réalisé par application d'un revêtement de surface éliminé avant la mise en service du disque de frein.

20. Procédé selon la revendication 19, caractérisé en ce que le revêtement de surface est appliqué par pistolettage.

21. Procédé selon l'une quelconque des revendications 19 et 20, caractérisé en ce que l'élimination du revêtement de surface est réalisée par usinage.

22. Procédé selon l'une quelconque des revendications 1 à 18, caractérisé en ce que le masquage d'une face frottante est réalisé par dépôt d'une couche de caoutchouc qui est éliminée par pelage avant la mise en service du disque de frein.

23. Procédé selon l'une quelconque des revendications 1 à 22, caractérisé en ce que l'on immerge simultanément plusieurs disques de frein, dont chaque face frottante est masquée, dans le bain de composition d'imprégnation.

24. Procédé selon la revendication 23, caractérisé en ce que les disques de frein sont disposés coaxialement et assemblés dans un outillage.

25. Procédé selon la revendication 24 dépendant de l'une quelconque des revendications 14 à 18, caractérisé en ce que le masquage de deux faces frottantes situées en regard est réalisé au moyen d'une même plaque appliquée de façon étanche aux liquides au moins sur le pourtour de chacune des deux faces frottantes.

26. Procédé selon l'une quelconque des revendications 22 à 25, pour l'application d'une protection anti-oxydation sur un disque de frein qui est destiné à être monté à une extrémité d'un empilement de disques stators alternant avec des disques rotors, et qui comporte une face externe non frottante opposée à une face interne frottante, caractérisé en ce que la face non frottante est au moins en partie masquée pendant l'étape d'imprégnation et, après formation de la protection interne anti-oxydation, est munie d'un revêtement de surface de protection contre l'oxydation.

27. Procédé selon l'une quelconque des revendications 1 à 26, caractérisé en ce que l'on utilise une composition d'imprégnation constituée par une solution contenant des précurseurs du matériau de la protection interne anti-oxydation et en ce que, après imprégnation, le disque est soumis successivement à un séchage et à un traitement thermique.

28. Procédé selon la revendication 27, caractérisé en ce que la composition d'imprégnation est constituée par une solution contenant des précurseurs d'une composition verrière autocicatrisante dans le domaine d'oxydation du carbone.

29. Procédé selon la revendication 28, caractérisé en ce que la composition d'imprégnation est constituée par une solution contenant des phosphates afin de former une composition verrière à base phosphate.

30. Procédé selon la revendication 29, caractérisé en ce que la composition d'imprégnation est constituée par une solution contenant des phosphates et au moins un sel précurseur d'oxyde de zinc.

31. Procédé selon la revendication 29, caractérisé en ce que la composition d'imprégnation est constituée par une solution aqueuse contenant des précurseurs d'une composition verrière ayant, exprimée en moles d'oxydes, la composition suivante :
20 à 60 % de P₂O₅,
10 à 30 % de ZnO,
10 à 30 % de Na₂O,
0 à 20 % d'au moins un oxyde choisi parmi CuO, CoO, NiO, FeO, MgO et PbO,
0 à 15 % d'au moins un oxyde de métal alcalin choisi parmi Li₂O et K₂O,
0 à 20 % d'au moins un oxyde choisi parmi Bi₂O₃, Al₂O₃ et B₂O₃, et
0 à 5 % d'au moins un oxyde choisi parmi V₂O₅ et TiO₂.

32. Procédé selon la revendication 31, caractérisé en ce que la composition verrière a, exprimée en moles d'oxydes, la composition suivante :
20 à 50 % de P₂O₅,
10 à 30 % de ZnO,
10 à 30 % de Na₂O,
0 à 20 % d'au moins un oxyde choisi parmi CuO, CoO, NiO, FeO, MgO et PbO,
0 à 15 % d'au moins un oxyde de métal alcalin choisi parmi Li₂O et K₂O,
0 à 15 % d'au moins un oxyde choisi parmi Bi₂O₃, Al₂O₃ et B₂O₃, et
0 à 5 % d'au moins un oxyde choisi parmi V₂O₅ et TiO₂.

33. Procédé selon l'une quelconque des revendications 31 et 32, caractérisé en ce que le rapport molaire entre oxydes modificateurs de verre comprenant ZnO, et oxydes formateurs de verre, comprenant essentiellement ou uniquement P₂O₅, est choisi à une valeur suffisamment élevée pour que la composition verrière présente une résistance à la corrosion par l'humidité.

34. Procédé selon la revendication 33, caractérisé en ce que ledit rapport molaire est au moins égal à 0,6.

35. Procédé selon la revendication 34, caractérisé en ce que ledit rapport molaire est au moins égal à 0,9.

36. Procédé selon l'une quelconque des revendications 30 à 35, caractérisé en ce que la solution d'imprégnation est réalisée en dissolvant d'abord dans l'eau un polyphosphate choisi parmi le métaphosphate et le trimétaphosphate de sodium, puis un sel de zinc choisi parmi le nitrate de zinc et le sulfate de zinc.

37. Procédé selon l'une quelconque des revendications 30 à 36, caractérisé en ce que la solution est acide avec un pH inférieur à 0,5.

38. Procédé selon l'une quelconque des revendications 28 à 37, caractérisé en ce que le traitement thermique est réalisé sous atmosphère réactive.

39. Procédé selon l'une quelconque des revendications 1 à 26, caractérisé en ce que l'on utilise une composition d'imprégnation constituée par un mélange à l'état fondu de constituants du matériau de la protection interne anti-oxydation.

40. Procédé selon l'une quelconque des revendications 1 à 26, caractérisé en ce que l'on utilise une composition d'imprégnation constituée par un mélange sous forme de poudres de précurseurs des constituants du matériau de la protection interne en suspension dans un liquide.

41. Procédé selon l'une quelconque des revendications 1 à 40, caractérisé en ce que les parties de surface non frottantes du disque de frein sont munies d'une protection externe anti-oxydation.

42. Procédé selon la revendication 41, caractérisé en ce que la protection externe est réalisée par formation d'un revêtement de surface compatible avec le matériau de la protection interne.

43. Procédé selon l'une quelconque des revendications 28 à 38, caractérisé en ce que les parties de surface non frottantes du disque de frein sont munies d'une protection externe anti-oxydation par dépôt d'une couche superficielle réalisée sur la base de ladite solution d'imprégnation.

44. Procédé selon la revendication 43, caractérisé en ce que, pour former la protection externe, on ajoute à ladite solution de la silice sous forme colloïdale.

## Patentansprüche

1. Verfahren zum Anbringen eines Oxidationsschutzes auf einer Bremsscheibe aus einem Kohlenstoff enthaltenden Verbundmaterial, welches eine innere offene Restporosität aufweist,
dadurch gekennzeichnet,
daß es die folgenden Schritte aufweist:
- Abdecken jeder Reibfläche der Bremsscheibe, um sie von der äußeren Umgebung flüssigkeitsdicht zu isolieren, daraufhin
- Eintauchen der Bremsscheibe in ein Bad einer Imprägnierungs-Zusammensetzung, die mindestens ein Produkt enthält, das fähig ist, die Bildung einer Oxidationsschutzschicht zu erlauben, und
- Ausführen einer Imprägnierung durch Herstellen eines Unterschieds zwischen dem Druck außen an den exponierten Oberflächen der eingetauchten Bremsscheibe und dem Druck im Inneren der inneren offenen Porosität der Bremsscheibe, ohne diese völlig von der Luft, die sie enthält, zu entleeren, dergestalt, daß die Imprägnierungs-Zusammensetzung dazu gezwungen wird, in einer bestimmten Tiefe ausgehend von den exponierten Oberflächen in das Innere der inneren offenen Porosität einzudringen, um dort die Bildung eines inneren Oxidationsschutzes zu erlauben.

2. Verfahren nach Anspruch 1,
dadurch gekennzeichnet,
daß der Druckunterschied eingestellt wird in Abhängigkeit von der gewünschten Eindringtiefe der Imprägnierungs-Zusammensetzung in die innere offene Porosität.

3. Verfahren nach Anspruch 2,
dadurch gekennzeichnet,
daß der Druckunterschied eingestellt wird, um das Eindringen der Imprägnierungs-Zusammensetzung in einer Tiefe zwischen etwa 2 mm und etwa 10 mm zu erlauben.

4. Verfahren nach einem der Ansprüche 1 bis 3,
dadurch gekennzeichnet,
daß man außerhalb der exponierten Oberflächen der eingetauchten Bremsscheibe einen Druck herstellt, der höher ist als der zu Beginn im Inneren der inneren offenen Porosität der Bremsscheibe herrschende Umgebungsdruck.

5. Verfahren nach Anspruch 4,
dadurch gekennzeichnet,
daß die Bremsscheibe eingetaucht wird in das Bad im Inneren eines Behälters, in dem ein Überdruck hergestellt wird.

6. Verfahren nach Anspruch 5,
dadurch gekennzeichnet,
daß die in das Bad eingetauchte Bremsscheibe in Abhängigkeit von dem herzustellenden Überdruck von einem Flüssigkeitsstand überragt wird.

7. Verfahren nach einem der Ansprüche 1 bis 6,
dadurch gekennzeichnet,
daß die Imprägnierungs-Zusammensetzung eine Viskosität zwischen etwa 0,1 dPa·s und etwa 10 dPa·s hat.

8. Verfahren nach einem der Ansprüche 1 bis 7,
dadurch gekennzeichnet,
daß man im Inneren der inneren offenen Porosität der Bremsscheibe, ohne sie völlig zu entleeren, einen Druck unterhalb des Umgebungsdrucks, der dort zu Beginn herrschte, herstellt.

9. Verfahren nach Anspruch 8,
dadurch gekennzeichnet,
daß die Bremsscheibe in das Bad im Inneren eines Behälters eingetaucht wird, und daß man in dem Behälter zuerst einen ersten Druck herstellt, der niedriger ist als der dort zu Beginn herrschende Umgebungsdruck, und darauf einen zweiten Druck herstellt, der höher ist als der erste Druck.

10. Verfahren nach Anspruch 9,
dadurch gekennzeichnet,
daß der zweite Druck der Umgebungsdruck ist.

11. Verfahren nach Anspruch 8,
dadurch gekennzeichnet,
daß der niedrigere Druck hergestellt wird, indem man mindestens eine abgedeckte Reibfläche der Scheibe mit einer Vakuumquelle in Verbindung bringt.

12. Verfahren nach Anspruch 8 oder 11,
dadurch gekennzeichnet,
daß man den niedrigeren Druck im Inneren der inneren Porosität der Scheibe nach dem Ende der Imprägnierung beibehält.

13. Verfahren nach einem der Ansprüche 1 bis 12,
dadurch gekennzeichnet,
daß die Bremsscheibe in dem Bad der Imprägnierungs-Zusammensetzung um eine horizontale Achse herum drehend mitgenommen wird, um die Eindringtiefe der Imprägnierungs-Zusammensetzung gleichmäßig zu machen.

14. Verfahren nach einem der Ansprüche 1 bis 13,
dadurch gekennzeichnet,
daß das Abdecken einer Reibfläche mittels einer mindestens am äußeren Umfang der Reibfläche flüssigkeitsdicht angebrachten Platte durchgeführt wird.

15. Verfahren nach Anspruch 14,
dadurch gekennzeichnet,
daß die Platte steif ist und mit einer am äußeren Umfang der Reibfläche angebrachten Dichtung versehen ist.

16. Verfahren nach Anspruch 14,
dadurch gekennzeichnet,
daß die Platte nahe an ihrem Umfang mindestens eine Verdickung besitzt, die eine am Außenumfang der Reibfläche angebrachte Dichtung bildet.

17. Verfahren nach Anspruch 14,
dadurch gekennzeichnet,
daß die Platte ein gegen die Reibfläche gedrücktes Flachmaterialstück aus elastisch verformbarem Material ist.

18. Verfahren nach einem der Ansprüche 14 bis 17,
dadurch gekennzeichnet,
daß die Platte mittels eines Werkzeugs dicht auf der Reibfläche angebracht festgehalten wird.

19. Verfahren nach einem der Ansprüche 1 bis 18,
dadurch gekennzeichnet,
daß das Abdecken einer Reibfläche durchgeführt wird durch Anbringen eines Oberflächen-Belags, der vor dem Inbetriebsetzen der Bremsscheibe entfernt wird.

20. Verfahren nach Anspruch 19,
dadurch gekennzeichnet,
daß der Oberflächenbelag durch Aufspritzen angebracht wird.

21. Verfahren nach Anspruch 19 oder 20,
dadurch gekennzeichnet,
daß das Entfernen des Oberflächenbelags durch spanabhebende Bearbeitung durchgeführt wird.

22. Verfahren nach einem der Ansprüche 1 bis 18,
dadurch gekennzeichnet,
daß das Abdecken einer Reibfläche durchgeführt wird durch Abscheiden einer Kautschukschicht, die vor dem Inbetriebsetzen der Bremsscheibe durch Abziehen entfernt wird.

23. Verfahren nach einem der Ansprüche 1 bis 22,
dadurch gekennzeichnet,
daß man gleichzeitig mehrere Bremsscheiben, bei denen jede Reibfläche abgedeckt ist, in das Bad der Imprägnierungs-Zusammensetzung eintaucht.

24. Verfahren nach Anspruch 23,
dadurch gekennzeichnet,
daß die Bremsscheiben in einem Werkzeug koaxial angeordnet und aneinandergefügt werden.

25. Verfahren nach Anspruch 24, insofern als er von einem der Ansprüche 14 bis 18 abhängt,
dadurch gekennzeichnet,
daß das Abdecken zweier gegenüberliegender Reibflächen mittels der gleichen Platte durchgeführt wird, die mindestens am äußeren Umfang jeder der beiden Reibflächen flüssigkeitsdicht angebracht ist.

26. Verfahren nach einem der Ansprüche 22 bis 25 zum Anbringen eines Oxidationsschutzes auf einer Bremsscheibe, die dazu bestimmt ist, an einem Außenende eines Stapels von Statorscheiben, die mit Rotorscheiben abwechseln, befestigt zu werden, und die eine nicht reibende äußere Fläche entgegengesetzt zu einer inneren reibenden Fläche besitzt,
dadurch gekennzeichnet,
daß die nicht reibende Fläche während des Imprägnierungs-Schritts mindestens zum Teil abgedeckt wird, und nach Ausbildung des inneren Oxidationsschutzes mit einem Oberflächenbelag zum Schutz gegen Oxidation versehen wird.

27. Verfahren nach einem der Ansprüche 1 bis 26,
dadurch gekennzeichnet,
daß eine Imprägnierungs-Zusammensetzung verwendet wird, die besteht aus einer Lösung, die Vorläufer des Materials zum inneren Oxidationsschutz enthält, und dadurch, daß die Scheibe nach der Imprägnierung nacheinander einem Trocknen und einer thermischen Behandlung unterzogen wird.

28. Verfahren nach Anspruch 27,
dadurch gekennzeichnet,
daß die Imprägnierungs-Zusammensetzung aus einer Lösung besteht, die Vorläufer einer selbstheilenden Glaszusammensetzung auf dem Gebiet der Oxidation von Kohlenstoff enthält.

29. Verfahren nach Anspruch 28,
dadurch gekennzeichnet,
daß die Imprägnierungs-Zusammensetzung aus einer Lösung besteht, die Phosphate enthält, um eine Glaszusammensetzung auf Phosphat-Basis zu bilden.

30. Verfahren nach Anspruch 29,
dadurch gekennzeichnet,
daß die Imprägnierungs-Zusammensetzung aus einer Lösung besteht, die Phosphate und mindestens ein Vorläufersalz von Zinkoxid enthält.

31. Verfahren nach Anspruch 29,
dadurch gekennzeichnet,
daß die Imprägnierungs-Zusammensetzung aus einer wässrigen Lösung besteht, die Vorläufer einer Glaszusammensetzung enthält, die, in Molen Oxid ausgedrückt, die folgende Zusammensetzung hat:
20 bis 60% P₂O₅,
10 bis 30% ZnO,
10 bis 30% Na₂O,
0 bis 20% mindestens eines Oxids, das ausgewählt ist aus CuO, CoO, NiO, FeO, MgO und PbO,
0 bis 15% mindestens eines Alkalimetalloxids, das ausgewählt ist aus Li₂O und K₂O,
0 bis 20% mindestens eines Oxids, das ausgewählt ist aus Bi₂O₃, Al₂O₃ und B₂O_{3,} und
0 bis 5% mindestens eines Oxids, das ausgewählt ist aus V₂O₅ und TiO₂.

32. Verfahren nach Anspruch 31, dadurch gekennzeichnet, daß die Glaszusammensetzung, in Molen Oxid ausgedrückt, die folgende Zusammensetzung hat:
20 bis 50% P₂O₅,
10 bis 30% ZnO,
10 bis 30% Na₂O,
0 bis 20% mindestens eines Oxids, das ausgewählt ist aus CuO, CoO, NiO, FeO, MgO und PbO,
0 bis 15% mindestens eines Alkalimetalloxids, das ausgewählt ist aus Li₂O und K₂O,
0 bis 15% mindestens eines Oxids, das ausgewählt ist aus Bi₂O₃, Al₂O₃ und B₂O₃ und
0 bis 5% mindestens eines Oxids, das ausgewählt ist aus V₂O₅ und TiO₂.

33. Verfahren nach Anspruch 31 oder 32,
dadurch gekennzeichnet,
daß für das Molverhältnis von glasmodifizierenden Oxiden, die ZnO enthalten, und glasbildenden Oxiden, die im wesentlichen oder nur P₂O₅ enthalten, ein ausreichend hoher Wert gewählt wird, daß die Glaszusammensetzung Beständigkeit gegen Korrosion durch Feuchtigkeit aufweist.

34. Verfahren nach Anspruch 33,
dadurch gekennzeichnet,
daß das Molverhältnis mindestens gleich 0,6 ist.

35. Verfahren nach Anspruch 34,
dadurch gekennzeichnet,
daß das Molverhältnis mindestens gleich 0,9 ist.

36. Verfahren nach einem der Ansprüche 30 bis 35,
dadurch gekennzeichnet,
daß die Imprägnierungs-Lösung hergestellt wird durch Lösen in Wasser von zuerst einem Polyphosphat, das ausgewählt ist aus Natrium-metaphosphat und Natrium-trimetaphosphat, dann einem Zinksalz, das ausgewählt ist aus Zinknitrat und Zinksulfat.

37. Verfahren nach einem der Ansprüche 30 bis 36,
dadurch gekennzeichnet,
daß die Lösung sauer ist mit einem pH unter 0,5.

38. Verfahren nach einem der Ansprüche 28 bis 37,
dadurch gekennzeichnet,
daß die thermische Behandlung in reaktiver Umgebung durchgeführt wird.

39. Verfahren nach einem der Ansprüche 1 bis 26,
dadurch gekennzeichnet,
daß eine Imprägnierungs-Zusammensetzung verwendet wird, die aus einem Gemisch von Bestandteilen des Materials zum inneren Oxidationsschutz im geschmolzenen Zustand besteht.

40. Verfahren nach einem der Ansprüche 1 bis 26,
dadurch gekennzeichnet,
daß eine Imprägnierungs-Zusammensetzung verwendet wird, die besteht aus einem Gemisch von Vorläufern der Bestandteile des Materials zum inneren Schutz in Form von Pulvern in Suspension in einer Flüssigkeit.

41. Verfahren nach einem der Ansprüche 1 bis 40,
dadurch gekennzeichnet,
daß die nicht reibenden Oberflächenbereiche der Bremsscheibe mit einem äußeren Oxidationsschutz versehen werden.

42. Verfahren nach Anspruch 41,
dadurch gekennzeichnet,
daß der äußere Schutz hergestellt wird durch Bilden eines Oberflächenbelags, der mit dem inneren Schutzmaterial verträglich ist.

43. Verfahren nach einem der Ansprüche 28 bis 38,
dadurch gekennzeichnet,
daß die nicht reibenden Oberflächenbereiche der Bremsscheibe mit einem äußeren Oxidationsschutz versehen werden durch Abscheidung einer Oberflächenschicht, die auf der Basis der Imprägnierungs-Lösung hergestellt wird.

44. Verfahren nach Anspruch 43,
dadurch gekennzeichnet,
daß, zur Ausbildung des äußeren Schutzes, der Lösung Siliciumoxid in koloidaler Form zugefügt wird.

## Claims

1. A process for applying oxidation protection to a brake disk of carbon-containing composite material with a residual internal open pore space, characterized in that it comprises the following steps:
. masking each friction face of the brake disk to seal and isolate it from the exterior from liquids;
. immersing the brake disk in a bath containing an impregnating composition containing at least one substance which can form a protective layer against oxidation; and
. impregnating by establishing a pressure difference between the pressure at the exterior of the exposed surfaces of the immersed brake disk and the interior of the open internal pore space of the brake disk, without totally evacuating the air contained therein, to force the impregnating composition to penetrate into the open internal pore space of the disk to a certain depth below the exposed surfaces, to form there an internal oxidation protection.

2. A process according to claim 1, characterized in that the pressure difference is adjusted as a function of the desired depth of penetration of the impregnating composition into the open internal pore space.

3. A process according to claim 2, characterized in that the pressure difference is adjusted to allow the impregnating composition to penetrate to a depth of between about 2 millimeters (mm) and about 10 mm.

4. A process according to any one of claims 1 to 3, characterized in that a pressure which is greater than the initial ambient pressure in the internal open pore space of the brake disk is established exterior to the exposed surfaces of the immersed brake disk.

5. A process according to claim 4, characterized in that the brake disk is immersed in the bath in a vessel in which an overpressure is established.

6. A process according to claim 5, characterized in that the brake disk immersed in the bath is covered by a height of liquid which is a function of the overpressure to be established.

7. A process according to any one of claims 1 to 6, characterized in that the impregnating composition has a viscosity of between about 0.1 dPa.s and about 10 dPa.s.

8. A process according to any one of claims 1 to 7, characterized in that a pressure is established in the internal open pore space of the brake disk which is lower than the initial ambient pressure therein, without completely evacuating it.

9. A process according to claim 8, characterized in that the brake disk is immersed in the bath in a vessel and a first pressure is established in the vessel which is lower than the initial ambient pressure therein followed by a second pressure which is greater than the first pressure.

10. A process according to claim 9, characterized in that the second pressure is ambient pressure.

11. A process according to claim 8, characterized in that the lower pressure is established by placing at least one masked friction face of a disk in communication with a vacuum source.

12. A process according to any one of claims 8 and 11, characterized in that the lower pressure is maintained in the internal pore space of the disk after the end of the impregnation step.

13. A process according to any one of claims 1 to 12, characterized in that the brake disk is rotated in the impregnating composition bath about a horizontal axis to make the penetration depth of the impregnating composition uniform.

14. A process according to any one of claims 1 to 13, characterized in that masking of a friction face is effected by means of a plate which is applied in a liquid tight fashion at least about the circumference of the friction face.

15. A process according to claim 14, characterized in that the plate is rigid and provided with a seal which is applied to the circumference of the friction face.

16. A process according to claim 14, characterized in that the plate comprises, near its periphery, at least one bead which forms the seal applied to the circumference of the friction face.

17. A process according to claim 14, characterized in that the plate is a sheet of elastically deformable material pressed against the friction face.

18. A process according to any one of claims 14 to 17, characterized in that the plate is held and sealed against the friction face by means of a tooling.

19. A process according to any one of claims 1 to 18, characterized in that the friction face is masked by applying a surface coating which is eliminated before the brake disk enters service.

20. A process according to claim 19, characterized in that the surface coating is applied by spraying.

21. A process according to claim 19 or claim 20, characterized in that the surface coating is eliminated by machining.

22. A process according to any one of claims 1 to 18, characterized in that the friction face is masked by depositing a layer of rubber which is eliminated by peeling before the brake disk enters service.

23. A process according to any one of claims 1 to 22, characterized in that several brake disks are simultaneously immersed in the impregnating composition bath, each friction face being masked.

24. A process according to claim 23, characterized in that the brake disks are disposed coaxially and assembled in a tooling.

25. A process according to claim 24 when dependent on any one of claims 14 to 18, characterized in that two facing friction faces are masked by means of a single plate which is applied in a liquid tight fashion at least about the circumference of each of the two friction faces.

26. A process according to any one of claims 22 to 25, for applying an oxidation protection to a brake disk for mounting at the end of a pack of stator disks alternating with rotor disks, and comprising a non friction outer surface opposite an inner friction face, characterized in that the non friction face is at least partially masked during the impregnation step and, after formation of the internal oxidation protection, is provided with a surface coating which protects against oxidation.

27. A process according to any one of claims 1 to 26, characterized in that an impregnating composition constituted by a solution containing precursors of the material for an internal oxidation protection is used and in that, after impregnation, the disk is dried then heat treated.

28. A process according to claim 27, characterized in that the impregnating composition is constituted by a solution containing precursors of a glass-containing composition which is self-healing in the carbon oxidation range.

29. A process according to claim 28, characterized in that the impregnating composition is constituted by a solution containing phosphates in order to form a phosphate based glass-containing composition.

30. A process according to claim 29, characterized in that the impregnating composition is constituted by a solution containing phosphates and at least one zinc oxide precursor.

31. A process according to claim 29, characterized in that the impregnating composition is constituted by an aqueous solution containing precursors of a glass-containing composition, which solution has the following composition, in moles of oxide:
. 20% to 60% of P₂O₅;
. 10% to 30% of ZnO;
. 10% to 30% of Na₂O;
. 0 to 20% of at least one oxide selected from CuO, CoO, NiO, FeO, MgO and PbO;
. 0 to 15% of at least one alkali metal oxide selected from Li₂O and K₂O;
. 0 to 20% of at least one oxide selected from Bi₂O₃, Al₂O₃ and B₂O₃; and
. 0 to 5% of at least one oxide selected from V₂O₅ and TiO₂.

32. A process according to claim 31, characterized in that the glass-containing composition has the following composition in moles of oxide:
. 20% to 50% of P₂O₅;
. 10% to 30% of ZnO;
. 10% to 30% of Na₂O;
. 0 to 20% of at least one oxide selected from CuO, CoO, NiO, FeO, MgO and PbO;
. 0 to 15% of at least one alkali metal oxide selected from Li₂O and K₂O;
. 0 to 15%, of at least one oxide selected from Bi₂O₃, Al₂O₃ and B₂O₃; and
. 0 to 5% of at least one oxide selected from V₂O₅ and TiO₂.

33. A process according to claim 31 or claim 32, characterized in that the molar ratio between the glass modifying oxides comprising ZnO, and the glass forming oxides, essentially comprising or consisting of P₂O₅, is sufficiently high for the glass-containing composition to exhibit a resistance to corrosion by moisture.

34. A process according to claim 33, characterized in that said molar ratio is at least 0.6.

35. A process according to claim 34, characterized in that said molar ratio is at least 0.9.

36. A process according to any one of claims 30 to 35, characterized in that the impregnating solution is formed by firstly dissolving in water, a polyphosphate selected from sodium metaphosphate and trimetaphosphate, then dissolving a zinc salt selected from zinc nitrate and zinc sulfate.

37. A process according to any one of claims 30 to 36, characterized in that the solution is acidic with a pH of less than 0.5.

38. A process according to any one of claims 28 to 37, characterized in that the heat treatment is carried out in a reactive atmosphere.

39. A process according to any one of claims 1 to 26, characterized in that an impregnating composition is used which is constituted by a molten mixture of constituents of the material providing the internal oxidation protection.

40. A process according to any one of claims 1 to 26, characterized in that an impregnating composition is used which is constituted by a mixture of powdered precursors of the constituents of the material forming the internal protection, in suspension in a liquid.

41. A process according to any one of claims 1 to 40, characterized in that the non friction surface portions of the brake disk are provided with an external oxidation protection.

42. A process according to claim 41, characterized in that the external protection is provided by forming a surface coating which is compatible with the material of the internal protection.

43. A process according to any one of claims 28 to 38, characterized in that the non friction surface portions of the brake disk are provided with an external oxidation protection by depositing a surface layer which is based on said impregnating solution.

44. A process according to claim 43, characterized in that colloidal silica is added to said solution to form the external protection.
